# EUROPÄISCHE PATENTANMELDUNG

(11) **EP 2 048 516 A2**
(43) Veröffentlichungstag der Anmeldung: **15.04.2009**
(21) Anmeldenummer: 08105297.9
(22) Anmeldetag: 11.09.2008
(51) Int. Cl.: G01S 13/93, G01S 15/93, G01S 17/93, B60W 30/06, B60W 30/08

(54) **Raumauflösendes Fahrerassistenzsystem**

(30) Priorität: 11.10.2007 DE 102007048848
(71) Anmelder: Robert Bosch GmbH, 70442 Stuttgart (DE)
(72) Erfinder: Weilkes, Michael, 31199 Diekholzen (DE); Zimmermann, Uwe, 71686 Remseck (DE)

(57) **Zusammenfassung**

Die Erfindung betrifft ein Fahrerassistenzsystem mit mindestens einer Einheit zur Detektion von Hindernissen und mindestens einer Einheit zur visuellen und/oder auditiven Darstellung der detektierten Hindernisse, sowie ein Verfahren zur Steuerung des Fahrerassistenzsystems. Das erfindungsgemäße Fahrerassistenzsystem ist durch die Verwendung von dreidimensionalen Abstandsdaten dazu in der Lage, zwischen beachtlichen Hindernissen, die nicht überfahren werden können, wie benachbarte Autos und unbeachtlichen Hindernissen, wie auf der Straße befindliche Kanaldeckel zu unterscheiden.

## Beschreibung

Die Erfindung betrifft ein Fahrerassistenzsystem mit mindestens einer Einheit zur Detektion von Hindernissen und mindestens einer Einheit zur visuellen und/oder auditiven Darstellung der detektierten Hindernisse, sowie ein Verfahren zur Steuerung des Fahrerassistenzsystems.

### TECHNISCHES GEBIET

Fahrerassistenzsysteme unterstützen den Lenker eines Fahrzeuges in für den Fahrer unübersichtlichen oder ermüdenden Situationen und helfen dem Fahrzeuglenker beispielsweise beim Einparken oder bei der Aufrechterhaltung einer konstanten Geschwindigkeit. Die Fahrerassistenzsysteme erhalten hierzu Odometriedaten, aus denen die aktuelle Geschwindigkeit und die aktuelle Lenkbewegung des Fahrzeuges ermittelt werden kann und zusätzliche Daten über Abstände zu einem nahen Hindernis, wie eine Wand, Fußgänger oder ein anderes parkendes oder auch voraus fahrendes Fahrzeug. Fahrerassistenzsysteme generieren je nach gewünschtem Grad der Assistenz ihre Hilfestellung aus unterschiedlichen Daten, beispielsweise aus Tachometerdaten zur Aufrechterhaltung der Geschwindigkeit in einfachen Cruise Control-Systemen, oder mit Hilfe von Ultraschallsensoren an Fahrzeugfront und -heck in Einparkhilfesystemen. Weitere bekannte Fahrerassistenzsysteme sind die adaptiven Geschwindigkeitsregler, englisch "adaptive cruise control" oder ACC, die in eingeschränktem Geschwindigkeitsbereich arbeiten und auch solche adaptiven Geschwindigkeitsregler, die im vollen Geschwindigkeitsbereich, also ohne Beschränkung auf ein begrenztes Geschwindigkeitsintervall, arbeiten.

### STAND DER TECHNIK

Um solche Fahrerassistenzsysteme mit Daten zu versorgen, welche Umgebungsparameter, wie Abstand des Fahrzeuges zu Hindernissen, in die Assistenzfunktion einbeziehen, ist es bekannt, Ultraschallsensoren am Heck des Fahrzeuges und auch an der Front des Fahrzeuges, bevorzugt in den Stoßstangen, einzusetzen, die dann nach Art eines Echolots den Abstand zu einem äußeren Hindernis detektieren. Der detektierte Abstand wird dann an eine optoakustische Anzeige im Inneren des Fahrzeuges geleitet, welche die Abstandsdaten visualisiert und im Falle des Unterschreitens eines Mindestabstandes eine Warnfunktion aktiviert. Dem Fahrer ist es dann überlassen, diese Hinweise zu befolgen oder diese zu ignorieren. Nicht immer ist die Warnung des Fahrers hilfreich, beispielsweise dann, wenn der Detektor eine Straßenschwelle als vermeintliches Hindernis detektiert oder wenn während des Rangiervorgangs sich das Fahrzeug zwar sehr nahe aber eben nicht kollidierend einem Hindernis nähert. Um die Fahrerassistenzsysteme zu verbessern, wurden bereits im Heck der Fahrzeuge Rückfahrkameras in Fahrzeuge eingebaut, die beispielsweise auf dem Display eines Autoradios oder auch auf einem eigenen Bildschirm ihr Bild übermitteln, damit der Fahrer den Abstand des gegebenenfalls schlecht überschaubaren Fahrzeuges zu einem Hindernis beim rückwärts Fahren abschätzen kann. Aber auch die im Heck montierte Rückfahrkamera birgt den Nachteil, dass eine wirkliche Abstandsmessung nur unzureichend vorgenommen wird, da der Abstand zum Hindernis vom Fahrer aus der Größe des Objektes auf dem Bildschirm und eventuell der Verzeichnung des Objektes geschätzt werden muss.

### DARSTELLUNG DER ERFINDUNG

Die Erfindung stellt ein Fahrerassistenzsystem zur Verfügung, welches mindestens eine Einheit zur Detektion von Hindernissen und mindestens eine Einheit zur visuellen und/oder auditiven Darstellung der detektierten Hindernisse aufweist, wobei die Einheit zur Detektion von Hindernissen Mittel zur winkel- und abstandsaufgelöster Konturenerfassung enthält. Weitere vorteilhafte Ausgestaltungen der Erfindung sind in den Unteransprüchen angegeben.

Vorteilhaft an dem erfindungsgemäßen Fahrerassistenzsystem ist, dass die Information über ein mögliches Hindernis umfangreicher ist und daher eine bessere Abschätzung und Einstufung des Hindernisses als beachtlich oder unbeachtlich zulässt, als es bisher bekannte Systeme zulassen. Dabei ist es möglich, dass -je nach Ausgestaltung der Erfindung- nur ein Detektor am Heck und einer an der Fahrzeugfront genügt, um umfangreichere Informationen über Hindernisse in der Nähe zur Verfügung zu stellen als es beispielsweise eine Schar von Ultraschall-Abstandssensoren zur Verfügung stellen können.

Die aus dem Detektor stammenden Daten können im Fahrzeug visualisiert und/oder akustisch dargestellt werden und ggf. einen Eingriff in Längs-/Querbewegung des Fahrzeugs auslösen, um dem Fahrer ein Rangieren auch ohne Blick auf einen Bildschirm zu ermöglichen. Dabei kann das Bild einer Rückfahrkamera mit den visualisierten Abstandsdaten überlagert werden, um ein naturgetreues Bild mit eingeblendeter Abstandsinformation darzustellen. Für eine leichtere Erfassbarkeit kann ein naturgetreues Bild einer Kamera mit Linien unterschiedlicher Intensität und Linienstärke überlagert werden, um so den Fahrer auf mögliche Kollisionspunkte zu hinzuweisen.

Zur winkel- und abstandsaufgelösten Konturenerfassung eignet sich ein Laserscanner und/oder auch ein Rangeimager.

Der Laserscanner lenkt einen Laserstrahl zeilenweise oder auch in anderer geometrischer Form über einen Raumwinkel und dabei wird mit Hilfe unterschiedlicher Methoden der Abstand vom Laser zum reflektierenden Objekt gemessen. Es ist möglich, den Abstand aus der Flugdauer eines reflektierten Impulses zur Abstandsbestimmung zu verwenden, aber es ist auch möglich, den Abstand durch triangulatorische Vermessung zu erhalten. Auch kann aus einem Modell über Oberflächeneigenschaften, die Intensität und die Polarisation des wieder am Detektor eingehenden Lichtes der Abstand mit Hilfe des Laserscanners bestimmt werden. Die exakte Funktionsweise ist literaturbekannt und kann vom Fachmann dieser Beschreibung beigezogen werden.

Bei der Verwendung eines Rangeimagers wird ein optisches Bild, beispielsweise von einer Videokamera, durch Beleuchtung des Objektes mit einem aufgeweiteten Laserstrahl ausgewertet und aus der Bild- und Reflektanzinformation kann ein zentralperspektivisches Abstandsmodell erzeugt werden. Auch die exakte Funktionsweise des Rangeimagers ist unter dieser Bezeichnung literaturbekannt und kann ebenfalls vom Fachmann dieser Beschreibung beigezogen werden.

Es ist vorteilhaft, wenn die dreidimensionalen Daten mit weiteren Daten eines weiteren Sensors kombiniert werden, beispielsweise, um einen Fahrzeugunfall vorzeitig zu detektieren. Die vorzeitige Detektion eines nahenden Unfalls kann dazu verwendet werden, um einen Sicherheitsgurt zu spannen, Airbags auszulösen, um eine Kraftstoffpumpe zu deaktivieren oder um weitere gefährliche Situationen im oder am Fahrzeug zu vermeiden.

Dabei kann die Sensorik um die Detektion des Straßenzustandes erweitert werden, wie beispielsweise eine trocken/nass-Erkennung oder eine Glatteiserkennung. Weitere Sensoren können die Erkennung von Straßenmarkierungen zur Verfügung stellen. Noch eine Kombinationsmöglichkeit ist die Ortserkennung mit Hilfe einer Navigationselektronik, so dass aus den Ortsdaten auf eine lokale Geschwindigkeitsbegrenzung geschlossen werden kann, die im Falle des Einsatzes des erfindungsgemäßen Fahrerassistenzsystems für eine adaptive Geschwindigkeitskontrolle die geregelte Geschwindigkeit entsprechend anhebt oder verringert.

In vorteilhafter Weise können die Raumdaten mit einem Ultraschallsystem kombiniert werden. In diesem Fall dient die Ultraschallsensorik zur Erkennung von groben Hindernissen, während die räumliche Erfassung der unmittelbaren Umgebung des Fahrzeuges zur Berechnung einer optimalen Route durch die Hindernisse verwendet werden kann. Die Berechnung der optimalen Route kann, je nach Umfang der gewünschten Fahrerassistenz dazu benutzt werden, die Route anzuzeigen oder durch aktiven Eingriff in das Lenkungssystem automatisch den Weg von einem aktuellen Standort zu einem gewünschten Ziel zu finden, wie beim Ein- oder Ausparken oder dem Rangieren in engen Gassen. Als alternative oder kumulative Nutzung des erfindungsgemäßen Fahrerassistenzsystems ist vorgesehen, die Sensorik auch zur Überwachung von Ladung einzusetzen, wobei eine Veränderung der Raumdaten in Relation zum Detektor als eine Änderung einer Transportgutposition anzeigt. Diese Daten lassen den Fahrer erkennen, dass ggf. eine gefährliche Veränderung des Fahrzeugschwerpunktes droht.

Es hat sich als vorteilhaft erwiesen, wenn der Erfassungswinkel des Detektors eingeschränkt werden kann. Dies ist beispielsweise dann von Vorteil, wenn der Detektor so am oder im Fahrzeug platziert ist, dass nur ein begrenzter Raumausschnitt für den Detektor einsehbar ist, oder wenn verhindert werden soll, dass der Detektor am Fahrzeug vorbei bewegende Hindernisse, wie überholende Autos oder Fußgänger, detektiert.

Die Messung kann kontinuierlich erfolgen, aber es ist auch möglich, die Messung mit einer Frequenz zu betreiben, die nicht einer kontinuierlichen Messung entspricht, sondern die Messdaten seltener erfasst, sofern eine seltenere Messung ausreichend ist, die Umgebung hinreichend zu vermessen. In Einparksituationen kann es sogar ausreichen, nur dann eine erneute Messung vorzunehmen, wenn sich das Fahrzeug um eine bestimmte Weglänge bewegt hat. Dabei kann die Wegstrecke zur Auslösung einer Messung immer gleich groß sein und es ist auch möglich, dass die Messung in Abhängigkeit von der Entfernung zu einem Hindernis unterschiedlich häufig durchgeführt wird.

Bei der Verwendung eines Laserscanners hat es sich als vorteilhaft erwiesen, wenn ein mikroelektromechanischer Spiegel (MEMS-Spiegel) verwendet wird, um den Laser beim Scan-Vorgang in gewünschter Weise abzulenken. Durch den Rückgriff auf diesen Spiegeltyp kann der Scanner stark verkleinert werden, in dem eine Kombination aus Laserdiode und MEMS-Spiegel verwendet wird. Die Miniaturisierung führt auch zu einer erhöhten Lebensdauer, da nur geringe Massen bei der Änderung der Spiegelstellung bewegt werden und keiner mechanische Wartung bedürfen. Durch die Verwendung von MEMS-Spiegeln, ist es auch möglich, in einem Bildpunkt mehrfache Ziele zu erfassen. Der Weg des Laserlichtes kann horizontal und vertikal unterschiedliche Winkel umfassen und somit Raumwinkel beliebiger Kontur bilden.

Der Lasertyp zur Erfassung der Raumdaten im unmittelbaren Bereich um das Fahrzeug herum ist in vorteilhafter Weise ein Infrarotlaser. Die Verwendung eines Infrarotlasers hat den Vorteil, dass dieser in der Umgebung befindliche Personen, die zufällig in den Messbereich des Laserscanners geraten, nicht geblendet werden. Auch wird dadurch vermieden, dass der Laser durch Glashindernisse regelrecht hindurchsieht, weil Glas in der Regel nicht oder nur geringfügig durchlässig ist für Infrarotstrahlung.

Zur Vermeidung von Fehlsignalen und unnötiger und störender Fahrerassistenz ist eine Einheit vorgesehen, die dazu in der Lage ist, gescannte Hindernisse zu erkennen und zu klassieren und in beachtliche und unbeachtliche Hindernisse einteilen kann. Überfahrbarer Unrat, beispielsweise Getränkedosen oder Gräser in Fugen des Bodenbelages werden durch das System so herausgefiltert und lösen keine Warnung oder keinen Eingriff in das aktuelle Fahrgeschehen aus. Weitere Objekte, die durch dieses System herausgefiltert werden können, sind hoch reflektierende Straßenmarkierungen, die von einem Rangeimager möglicherweise als nahes Hindernis falsch interpretiert werden. Ein weiterer Vorteil, den die Verwendung eines Infrarotlasers bietet, ist eine bessere Schlechtwettertauglichkeit, da Infrarotstrahlen durch Regenwassertropfen weniger stark gebrochen werden und daher weniger anfällig in Schlechtwettersituationen sind.

Das erfindungsgemäße Verfahren und das erfindungsgemäße Fahrerassistenzsystem findet Verwendung in Fahrzeugen des täglichen Straßenverkehrs, in Fahrzeugen auf Flughäfen, in Häfen, in Lagerhallen, auf Baustellen, im Straßenbau aber auch für Raumfahrzeuge, die mit anderen Raumfahrzeugen zusammendocken.

### KURZE BESCHREIBUNG DER ZEICHNUNGEN

Die Erfindung wird anhand der beiliegenden Figuren näher erläutert.

Es zeigt
- Figur 1: eine Ausparksituation mit skizziertem Raumwinkel der Raumvermessung,
- Figur 2: eine Ausparksituation mit skizziertem Raumwinkel der Raumvermessung und Schattenbildung durch ein benachbartes Fahrzeug,
- Figur 3: eine Laserscanner an einem Auto, das die unmittelbare Umgebung vermisst,
- Figur 4: eine Anzeige, welche die Raumdaten visualisiert.

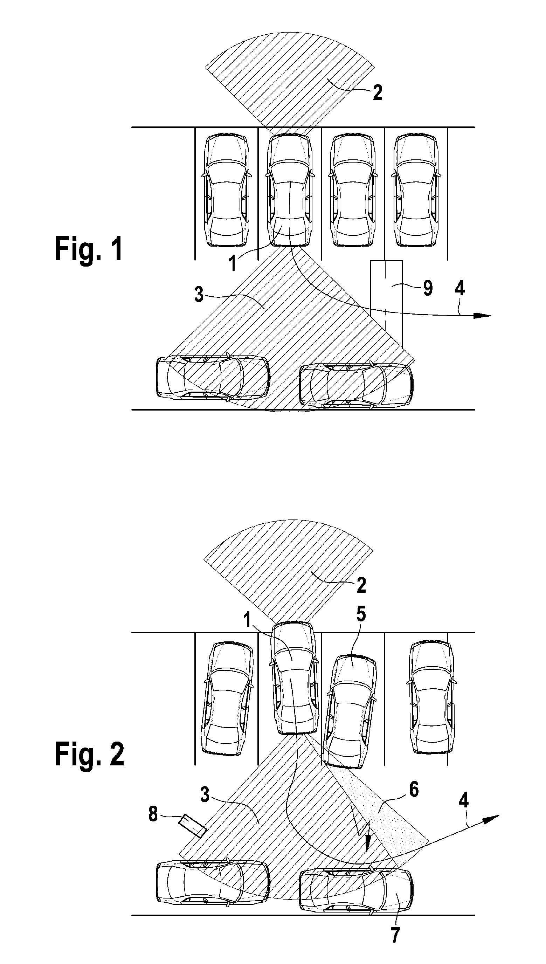

In Figur 1 ist eine tägliche Ausparksituation eines Fahrzeuges 1 dargestellt, welches zwei Detektoren zur winkel- und abstandsaufgelöster Konturenerfassung aufweist, welche die skizzierten Raumwinkel 2 an der Fahrzeugfront und den Raumwinkel 3 am Fahrzeugheck aufweisen. Wenn der Fahrer des Fahrzeuges 1 rückwärts aus der Parklücke heraus fahren möchte, ist das erfindungsgemäße Fahrerassistenzsystem dazu in der Lage, den Weg 4 vorzuschlagen und gegebenenfalls eine Lenkhilfe anzubieten, da aus der momentanen Standsituation der raum- und abstandsauflösende Detektor diesen Weg aus den Umgebungsdaten berechnen kann. Dabei kann das Fahrerassistenzsystem zwischen beachtlichen Hindernissen, wie benachbarte Autos und unbeachtlichen Hindernissen, wie eine Straßenschwelle 9, unterscheiden.

In Figur 2 ist eine Ausparksituation desselben Fahrzeuges in einer anderen Stellung dargestellt, in welcher der Detektor am Heck des Fahrzeuges 1 durch ein benachbart parkendes Fahrzeug 5 teilweise verdeckt ist und daher einen Schatten mit dem einskizzierten Raumwinkel 6 wirft. Trotz des Schattens und somit eingeschränkter Information über den zur Verfügung stehenden Raum im Schatten des Raumwinkels 6 kann das Fahrerassistenzsystem feststellen, dass es unweigerlich zu einer Kollision mit Fahrzeug 7 kommen wird, sofern nicht mehrfache Rangiermaneuver unternommen werden. Dabei beachtet das Fahrerassistenzsystem auch in diesem Fall die Unterschiede zwischen beachtlichen Hindernissen, wie die benachbarten Autos 5 und 7 und unbeachtlichen Hindernissen, wie beispielsweise eine fortgeworfene Getränkedose 8 auf der Straße.

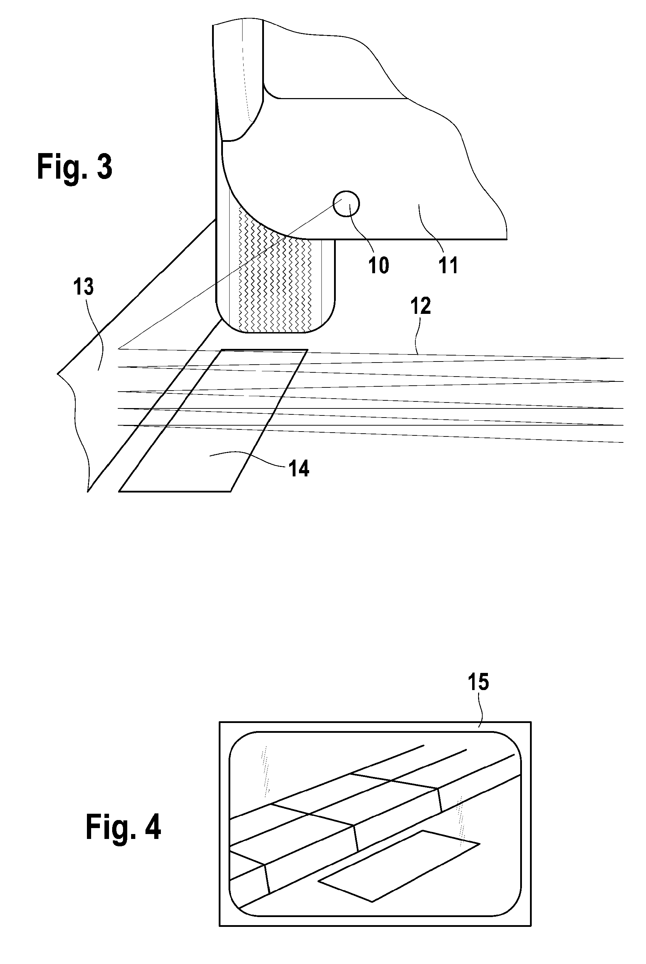

In Figur 3 ist dargestellt, wie ein Laserscanner 10 am Heck eines hier nur ausschnittsweise dargestellten Fahrzeuges 11 einen Laserstrahl zur Raumerfassung entlang eines Weges 12 leitet, um die nahe räumliche Umgebung abzutasten. Dabei überstreift Laserstrahl des Laserscanners 10 eine Straßenkante 13 und einen Kanaldeckel 14, wobei auch hier das Fahrerassistenzsystem zwischen den beachtlichen Hindernissen, nämlich der Straßenkante 13, und unbeachtlichen Hindernissen, nämlich hier der Kanaldeckel 14, unterscheiden kann.

In Figur 4 ist die Lage der Objekte, die vom Laserscanner 10 in Figur 3 erfasst wurden, räumlich auf einer Anzeige 15 dargestellt, wobei durch die räumliche Erfassung auch eine andere Perspektive zur Darstellung gewählt werden kann, als der Perspektive des Laserscanners in Figur 3 entspricht.

## Patentansprüche

1. Fahrerassistenzsystem aufweisend mindestens eine Einheit (10) zur Detektion von Hindernissen (5, 7, 8, 13, 14) und mindestens eine Einheit (15) zur visuellen und/oder auditiven Darstellung der detektierten Hindernisse (5, 7, 8, 13, 14), wobei die Einheit zur Detektion (10) von Hindernissen (5, 7, 8, 13, 14) Mittel (10) zur winkel- und abstandsaufgelöster Konturenerfassung aufweist.

2. Fahrerassistenzsystem nach Anspruch 1, in welchem die zur winkel- und abstandsaufgelöster Konturenerfassung eingesetzten Mittel (10) ein Laserscanner (10), ein Rangeimager oder eine Kombination aus beidem aufweist.

3. Fahrerassistenzsystem nach einem der Ansprüche 1 oder 2, welches zusätzlich einen Ultraschallscanner aufweist.

4. Fahrerassistenzsystem nach einem der Ansprüche 1 bis 3, wobei der Erfassungswinkel der Einheit (10) zur Detektion von Hindernissen (5, 7, 8, 13, 14) in einem vorwählbaren Bereich einschränkbar ist.

5. Fahrerassistenzsystem nach einem der Ansprüche 1 bis 4, wobei die Einheit (10) zur Detektion von Hindernissen (5, 7, 8, 13, 14) mit einer vorwählbaren Frequenz und/oder nach einer vorwählbaren Fahrtstrecke die Detektion wiederholt.

6. Fahrerassistenzsystem nach einem der Ansprüche 1 bis 5, wobei eine Einheit zur Berechnung einer optimalen Route (4) durch die detektierten Hindernisse (5, 7, 8, 13, 14) oder an denen vorbei vorhanden ist.

7. Fahrerassistenzsystem nach einem der Ansprüche 1 bis 6, wobei eine Einheit zum assistierenden Eingriff in die Lenkung und/oder in die Geschwindigkeit vorgesehen ist.

8. Fahrerassistenzsystem nach einem der Ansprüche 1 bis 7, wobei ein eingesetzter Laserscanner (10) einen mikroelektromechanischen Spiegel zur Ablenkung des eingesetzten Lasers aufweist.

9. Fahrerassistenzsystem nach Anspruch 8, wobei der eingesetzte Laser ein Infrarotlaser ist.

10. Fahrerassistenzsystem nach einem der Ansprüche 1 bis 9, wobei mindestens eine Einheit zur Klassifizierung von Hindernissen vorhanden ist, die zwischen überfahrbaren (8, 14) und nicht überfahrbahren Hindernissen (5, 7, 13) unterscheidet.

11. Verfahren zur Steuerung eines optischen und/oder akustischen Fahrerunterstützungssystems, in welchem Daten zur Berechnung der optischen und/oder akustischen Signale durch eine Einheit zur Detektion von zur Verfügung gestellt werden, die mit Hilfe eines Laserscanners (10) oder eines Rangeimagers erfasst werden.
